# EUROPÄISCHE PATENTSCHRIFT

(11) **EP 3 517 743 B1**
(45) Veröffentlichungstag und Bekanntmachung des Hinweises auf die Patenterteilung: **09.12.2020**
(21) Anmeldenummer: 19150872.0
(22) Anmeldetag: 09.01.2019
(51) Int. Cl.: F01L 1/344, F16B 2/00, F16D 1/076

(54) **SCHWENKMOTORVERSTELLER FÜR EINE NOCKENWELLE UND NOCKENWELLENANORDNUNG MIT EINER NOCKENWELLE UND EINEM SCHWENKMOTORVERSTELLER**
PIVOTING MOTOR ADJUSTER FOR A CAMSHAFT AND CAMSHAFT ASSEMBLY HAVING A CAMSHAFT AND A PIVOTING MOTOR ADJUSTER
DISPOSITIF DE RÉGLAGE DE MOTEUR OSCILLANT POUR UN ARBRE À CAMES ET AGENCEMENT D'ARBRE À CAMES DOTÉ D'UN ARBRE À CAMES ET D'UN DISPOSITIF DE RÉGLAGE DE MOTEUR OSCILLANT

(30) Priorität: 30.01.2018 DE 102018101971; 23.10.2018 DE 102018126302
(43) Veröffentlichungstag der Anmeldung: 31.07.2019
(73) Patentinhaber: ECO Holding 1 GmbH, 97828 Marktheidenfeld (DE)
(72) Erfinder: Belicke, Sebastian, 73249 Wernau (DE); Berwinkl, Andreas, 72631 Aichtal-Grötzingen (DE); Lösch, Norbert, 73230 Kirchheim (DE)

(56) Entgegenhaltungen:
- WO-A1-2016/131730
- DE-A1- 10 161 698
- DE-A1- 10 161 701
- DE-A1- 19 710 932
- DE-A1-102011 014 460
- DE-A1-102011 077 020
- DE-A1-102012 219 949
- DE-A1-102015 220 169

## Beschreibung

Die Erfindung betrifft einen Schwenkmotorversteller für eine Nockenwelle nach dem Oberbegriff des Patentanspruchs 1. Ferner betrifft die Erfindung eine Nockenwellenanordnung mit einer Nockenwelle und einem Schwenkmotorversteller.

Nockenwellenanordnungen sowie Schwenkmotorenversteller für Nockenwellen von Verbrennungsmotoren sind wohlbekannt. Die Nockenwellenversteller werden in modernen Brennkraftmaschinen zur Optimierung der Verbrauchs- und Leistungswerte eingesetzt und dienen dazu, die Öffnungs- und Schließzeitpunkte der Gaswechselventile zu verändern, um die Phasenrelation zwischen Kurbelwelle und Nockenwelle in einem definierten Winkelbereich, zwischen einer maximalen Früh- und einer maximalen Spätposition, variabel gestalten zu können. Zu diesem Zweck ist der Nockenwellenversteller in einen Antriebsstrang integriert, über welchen Drehmomente von der Kurbelwelle auf die Nockenwelle übertragen werden. Der Nockenwellenversteller besitzt dazu einen von der Kurbelwelle angetriebenen Stator und einen drehfest mit der Nockenwelle verbundenen Rotor. Zwischen dem Rotor und dem Stator sind mit einem Hydraulikfluid beaufschlagbare Arbeitskammern vorgesehen, welche durch dem Rotor zugeordnete Flügel in gegeneinander wirkende Druckräume unterteilt sind. Während des Betriebes der Brennkraftmaschine sind beide Druckräume permanent mit Hydraulikfluid gefüllt, so dass der Rotor und der Stator relativ steif miteinander verbunden sind. Die Steuerzeiten der Gaswechselventile werden dadurch verändert, dass der Druck in einem der Druckräume erhöht wird, während der Druck in dem jeweils anderen Druckraum gesenkt wird. Das Hydraulikfluid muss dazu dem einen Druckraum zugeführt und aus dem anderen Druckraum zu einem Tank hin abgeführt werden, wodurch sich die Winkellage zwischen der Nockenwelle und der Kurbelwelle verändert.

Der Schwenkmotorversteller bzw. die Nockenwellenanordnung sind zum Teil sehr hohen Wechselmomenten und Querkräften am Nockenwellentrieb ausgesetzt.

Aus der DE 10 2009 050 779 A1 ist es beispielsweise bekannt, zur Reibwerterhöhung der kraftschlüssigen Verbindung zwischen Nockenwelle und Schwenkmotorversteller eine Reibscheibe vorzusehen.

Aus den Anmeldungen DE 101 61 698 A1 und DE 101 61 701 A1 ist ebenfalls ein zusätzliches Bauteil mit einer reibkrafterhöhten Beschichtung bekannt. Als alternative Ausführungsform schlägt die DE 101 61 698 A1 vor, dem Grundwerkstoff der Nockenwelle Haftstoffpartikel beizumengen.

Aus der DE 10 2015 220 169 A1 ist ferner eine Folie bestehend aus einer Matrix sowie einer Vielzahl von in der Matrix angeordneten Hartpartikeln bekannt, welche zwischen zwei Bauteile angeordnet wird.

In der DE 10 2011 014 460 A1 wird eine Aufrauhung der Oberfläche beispielsweise mittels Laser oder Prägepressung zur Erhöhung der Reibung vorgeschlagen.

Die Aufgabe der vorliegenden Erfindung ist es, einen Schwenkmotorversteller für eine Nockenwelle insbesondere für den Einsatz bei sehr hohen Wechselmomenten und Querkräften zu verbessern.

Eine weitere Aufgabe der Erfindung ist es, eine Nockenwellenanordnung mit einer Nockenwelle und einem Schwenkmotorversteller insbesondere für den Einsatz bei sehr hohen Wechselmomenten und Querkräften zu verbessern.

Die Aufgaben werden erfindungsgemäß durch einen Schwenkmotorversteller für eine Nockenwelle mit den Merkmalen das Patentanspruchs 1 und eine Nockenwellenanordnung mit den Merkmalen des Patentanspruchs 13 gelöst. Vorteilhafte Ausgestaltungen mit zweckmäßigen und nicht-trivialen Weiterbildungen der Erfindung sind in den jeweiligen Unteransprüchen angegeben.

Der erfindungsgemäße Schwenkmotorversteller für eine Nockenwelle weist einen Stator, welcher über ein Antriebsrad mit einer Kurbelwelle antriebsverbunden ist, und einen Rotor auf, der mit einer Nockenwelle drehfest verbindbar und gegen den Stator verdrehbar ist. Das Antriebsrad ist mit einem Statorgrundkörper oder einem mit dem Statorgrundkörper abgedichtet verbundenen Statordeckel drehfest oder einteilig ausgebildet. Zwischen zwei Stegen des Stators ist jeweils ein Flügel des Rotors positionierbar und mit Hilfe des Flügels ist ein zwischen den beiden Stegen ausgebildeter Zwischenraum in eine erste Druckkammer und in eine zweite Druckkammer geteilt. Der Rotor oder ein mit dem Rotor zusammenwirkendes Bauteil weist eine erste Kontaktfläche zur kraftschlüssigen Verbindung mit einer zweiten, an der Nockenwelle oder einem Nockenwellenbauteil ausgebildeten Kontaktfläche auf. Weiter weist der Statorgrundkörper eine dritte Kontaktfläche zur kraftschlüssigen Verbindung mit einer vierten, an dem Statordeckel ausgebildeten Kontaktfläche auf.
Es sind Mittel zur Reibwerterhöhung der kraftschlüssigen Verbindung durch einen Mikroformschluss zwischen Rotor und Nockenwelle und/oder zwischen Statorgrundkörper und Statordeckel vorgesehen.

Erfindungsgemäß sind zur Reibwerterhöhung Hartpartikel vorgesehen, welche ohne zusätzliche Bauteile oder Beschichtungen der Kontaktflächen mit wenigstens einer der Kontaktflächen verbindbar bzw. verbunden sind. Die Hartpartikel erhöhen vorteilhafterweise die Haftreibung an den Kontaktflächen zwischen den beiden verbundenen Reibpartnern. Hierdurch können bei gleicher Vorspannung der Reibpartner - hier zwischen Rotor und Nockenwelle und/oder zwischen Statorgrundkörper und Statordeckel - höhere Momente bzw. Querkräfte übertragen werden. Ebenso kann die Vorspannung der Reibpartner bei gleich übertragbaren Momenten reduziert werden. Ein zusätzliches Bauteil zur Reibwerterhöhung, eine damit einhergehende Montage und zusätzliche Bearbeitungen der Bauteile für das zusätzliche Bauteil können entfallen. Ebenso können eine zusätzliche Beschichtung der Kontaktfläche bzw. der Kontaktflächen und der damit verbundene Aufwand entfallen. Durch den Entfall von zusätzlichen Bauteilen oder Beschichtungen kann vorteilhafterweise die vorhandene Toleranzkette der zusammenwirkenden Bauteile reduziert werden.

Die Hartpartikel weisen erfindungsgemäß eine Ummantelung auf, wobei die Hartpartikel durch Aufschmelzen der Ummantelung mit der bzw. den Kontaktflächen verliersicher verbindbar bzw. verliersicher verbunden sind. Der Aufschmelzprozess ermöglicht eine verliergesicherte Haftung der Hartpartikel. Diese können dabei in Größe an die auftretenden Momente und Querkräfte angepasst werden.
Vorzugsweise sind die Hartpartikel partiell oder ganzflächig auf der bzw. den Kontaktflächen aufgebracht worden, wodurch die Reibwerterhöhung zusätzlich angepasst werden kann.

Gemäß einer vorteilhaften Ausführungsform sind die Hartpartikel als Industrie-Diamanten mit einer Nickelummantelung ausgebildet und mittels eines atmosphärischen Plasmabeschichtungsverfahrens haftend aufgebracht worden.

Die Kontaktflächen sind in einer bevorzugten Ausführung als Stirnflächen ausgebildet, die beispielswiese mittels einer Zentralschraube eines Zentralventils einfach kraftschlüssig verbindbar sind. Die Hartpartikel sind auf die Stirnflächen einfach aufbringbar.

Die Hartpartikel können auf der ersten Kontaktfläche des Rotors und/oder der zweiten Kontaktfläche der Nockenwelle und/oder auf der dritten Kontaktfläche des Statorgrundkörpers und/oder auf der vierten Kontaktfläche des Statordeckels haftend aufgebracht sein. Denkbar sind als Ausführungen je nach Anwendungsfall alle möglichen Kombinationen.

Alternativ umfasst der Rotor einen Adapter, an welchem die erste Kontaktfläche ausgebildet ist. Der Adapter kann aus einem anderen Werkstoff wie der Rotor oder beispielsweise mittels einer Wärmebehandlung behandelt sein.

Gemäß einer vorteilhaften Ausführungsform der Erfindung sind die Hartpartikel wenigstens auf der dritten Kontaktfläche des Statorgrundkörpers haftend aufgebracht, wobei die dritte Kontaktfläche aus mehreren Kontaktbereichen ausgebildet ist, die im Bereich von in den Stegen ausgebildeten Aufnahmebohrungen vorgesehen sind. Die reibwerterhöhenden Mittel sind damit gezielt in den hochbelasteten Bereichen des Statorgrundkörpers angeordnet.

Vorzugsweise sind die Kontaktbereiche kreisförmig und jeweils konzentrisch zu der jeweiligen Aufnahmebohrung ausgebildet, wodurch das gezielte Aufbringen in den hochbelasteten Bereichen vereinfacht wird.

Ebenso können die Kontaktbereiche belastungsabhängig um die jeweilige Aufnahmebohrung ausgebildet sein. Mit anderen Worten ist auch eine unsymmetrische Ausbildung der Kontaktbereiche denkbar.

Um die Verschraubungsfunktion nicht durch die Hartpartikel zu beeinflussen, sind die Kontaktbereiche vorzugsweise jeweils in einem bestimmten Abstand von der Aufnahmebohrung beabstandet vorgesehen. Diese Aussparung kann vorzugsweise mittels einer Maskierung/Abdeckung der Gewindebohrung hergestellt werden.

Die erfindungsgemäße Nockenwellenanordnung umfasst eine Nockenwelle und einen vorstehend beschriebenen Schwenkmotorversteller.

Vorzugsweise sind die Nockenwelle und der Rotor mittels einer Zentralschraube kraftschlüssig verbunden.

Weitere Vorteile, Merkmale und Einzelheiten der Erfindung ergeben sich aus der nachfolgenden Beschreibung von Ausführungsbeispielen sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

In der Zeichnung zeigen:
Fig. 1 einen Querschnitt eines Schwenkmotorverstellers;
Fig. 2 ein erstes Ausführungsbeispiel eines erfindungsgemäßen Schwenkmotorverstellers im Längsschnitt mit einem vergrößerten Ausschnitt der ersten Kontaktfläche;
Fig. 3 einen Längsschnitt einer erfindungsgemäßen Nockenwellenanordnung mit dem Schwenkmotorversteller gemäß Fig. 2 mit einem vergrößerten Ausschnitt der verbundenen Kontaktflächen;
Fig. 4 einen Statorgrundkörper eines zweiten Ausführungsbeispiels eines erfindungsgemäßen Schwenkmotorverstellers und
Fig. 5 einen vergrößerten Ausschnitt Z des Statorgrundkörpers gemäß Fig. 4.

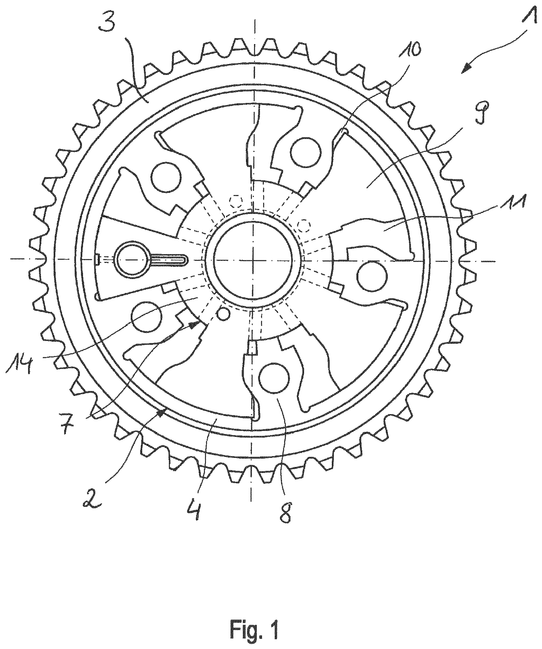

Fig. 1 zeigt einen Querschnitt eines Schwenkmotorverstellers 1, welcher während des Betriebes eines nicht näher dargestellten Verbrennungsmotors eine Änderung von Öffnungs- und Schließzeiten von Gaswechselventilen des Verbrennungsmotors ermöglicht. Hierzu wird mit Hilfe des Schwenkmotorverstellers 1 eine relative Winkellage einer nicht näher dargestellten Nockenwelle des Verbrennungsmotors gegenüber einer nicht näher dargestellten Kurbelwelle des Verbrennungsmotors stufenlos verändert, wobei die Nockenwelle relativ zur Kurbelwelle verdreht wird. Durch Verdrehen der Nockenwelle werden die Öffnungs- und Schließzeitpunkte der Gaswechselventile so verschoben, dass der Verbrennungsmotor bei der jeweiligen Drehzahl seine optimale Leistung bringt.

Der Schwenkmotorversteller 1 weist einen zylindrischen Stator 2 auf, der drehfest mit einem Antriebsrad 3 der Nockenwelle verbunden ist. Das Antriebsrad 3 ist als ein Kettenrad ausgebildet, über das eine nicht näher dargestellte Kette als Antriebselement geführt wird. Über dieses Antriebselement und das Antriebsrad 3 ist der Stator 2 mit der Kurbelwelle antriebsverbunden. Alternativ kann das Antriebsrad als Riemenrad, Zahnrad oder Kettenrad ausgebildet sein.

Der Stator 2 weist einen im Wesentlichen zylindrischen Statorgrundkörper 4 auf, an welchem auf dessen Innenseite sich radial nach innen erstreckende Stege 8 in regelmäßigen Abständen ausgebildet sind, derart, dass zwischen jeweils zwei benachbarten Stegen 8 ein Zwischenraum gebildet ist. In diesen Zwischenraum wird ein Druckmedium, im Allgemeinen ein Hydraulikfluid, mit Hilfe eines nicht näher dargestellten Hydraulikventils gesteuert eingebracht. Das Hydraulikventil kann als Zentralventil im Schwenkmotorversteller 1 oder als dezentrales Ventil außerhalb des Schwenkmotorverstellers 1 angeordnet sein.

Der Statorgrundkörper 4 ist mit einem oder zwei im Wesentlichen scheibenförmig ausgebildeten Statordeckeln abgedichtet verbunden, wobei Schrauben 19 Aufnahmebohrungen 17 der Stege 8 zur Verbindung des Statorgrundkörpers 4 mit dem oder den Statordeckeln durchragen.
Der Statorgrundkörper 4 kann einteilig mit einem Statordeckel ausgebildet sein. Weiter kann das Antriebsrad 3 einteilig mit dem Statorgrundkörper 4 oder dem Statordeckel ausgebildet sein.

In den Zwischenraum hineinragend ist ein Flügel 9 positioniert, welcher an einer Rotornabe 14 eines Rotors 7 angeordnet ist. Der Anzahl der Zwischenräume entsprechend weist die Rotornabe 14 eine Anzahl von Flügel 9 auf.
Mit Hilfe der Flügel 9 sind somit die Zwischenräume jeweils in eine erste Druckkammer 10 und eine zweite Druckkammer 11 unterteilt. Zur Reduzierung eines Druckverlustes in der ersten Druckkammer 10 und der zweiten Druckkammer 11 sind die Stege 8 mit ihren Stirnseiten an eine Außenmantelfläche der Rotornabe 14 dichtend anliegend ausgebildet. Ebenso liegen die Flügel 9 mit ihren Stirnseiten dichtend an einer der Außenmantelfläche gegenüberliegend positionierten Innenwand des Statorgrundkörpers 4 an.

Der Rotor 7 ist drehfest mit der Nockenwelle 5 des Verbrennungsmotors verbunden, welche zusammen mit dem Schwenkmotorversteller 1 eine Nockenwellenanordnung 20 bildet. Um die Winkellage zwischen der Nockenwelle 5 und der Kurbelwelle zu verändern, wird der Rotor 7 relativ zum Stator 2 um eine Rotationsachse um einen Verstellwinkel gedreht, wobei der Stator 2 koaxial zum Rotor 7 angeordnet ist. Hierzu wird je nach gewählter Drehrichtung das Druckmedium in der ersten Druckkammer 10 oder in der zweiten Druckkammer 11 unter Druck gesetzt, während die zweite Druckkammer 11 bzw. die erste Druckkammer 10 entlastet wird. Die Entlastung erfolgt mit Hilfe eines Tankzugangs, welcher zur Entlastung geöffnet ist.

Der Schwenkmotorversteller 1 ist im Betrieb zum Teil sehr hohen Wechselmomenten und Querkräften am Nockenwellentrieb ausgesetzt. Um den Schwenkmotorversteller 1 und die Nockenwellenanordnung 20 insbesondere für den Einsatz bei sehr hohen Wechselmomenten zu verbessern, sind Mittel zur Reibwerterhöhung der kraftschlüssigen Verbindung durch einen Mikroformschluss zwischen Rotor 7 und Nockenwelle 5 (bzw. Nockenwellenbauteil) und/oder zwischen Statorgrundkörper 4 und Statordeckel vorgesehen.
Der Rotor 7 bzw. dessen Rotornabe 14 oder ein mit dem Rotor zusammenwirkendes Bauteil weist an seiner Stirnseite eine erste Kontaktfläche 12 zur kraftschlüssigen Verbindung mit einer zweiten, an der Nockenwelle 5 ausgebildeten Kontaktfläche 13 auf.
Der Statorgrundkörper 4 weist an seiner Stirnseite eine dritte Kontaktfläche 16 auf, welche mit einer innenliegenden Stirnseite des Statordeckels als vierte Kontaktfläche 21 zur kraftschlüssigen Verbindung anliegt.

Erfindungsgemäß sind zur Reibwerterhöhung Hartpartikel 6 vorgesehen, welche ohne zusätzliche Bauteile oder zusätzliche Beschichtungen auf den Kontaktflächen mit wenigstens einer der Kontaktflächen 12, 13, 16, 21 verbindbar bzw. verbunden sind. Dabei ist es denkbar, die Hartpartikel 6 auf eine einzige Kontaktfläche 12, 13, 16, 21 oder auf zwei zusammenwirkenden Kontaktflächen aufzubringen.

Diese Hartpartikel 6, welche beispielsweise als Industrie-Diamanten ausgebildet sind, werden mittels eines atmosphärischen Plasmabeschichtungsverfahrens haftend auf die Kontaktfläche 12, 13, 16, 21 oder die Kontaktflächen 12, 13, 16, 21 aufgebracht, indem sich eine Ummantelung 15 der Hartpartikel 6 durch Aufschmelzen mit der jeweiligen Kontaktfläche verbindet.
Die Ummantelung 15 kann vorzugsweise als leicht schmelzbare Nickelschicht vorgesehen sein. Die Hartpartikel 6 können dabei in Größe an den jeweiligen Anwendungsfall und die dabei auftretenden Momente und Querkräfte sowie an Materialpaarungen angepasst werden. Der Aufschmelzprozess ermöglicht eine verliergesicherte Verbindung der Hartpartikel 6 mit der jeweiligen Kontaktfläche 12, 13, 16, 21.

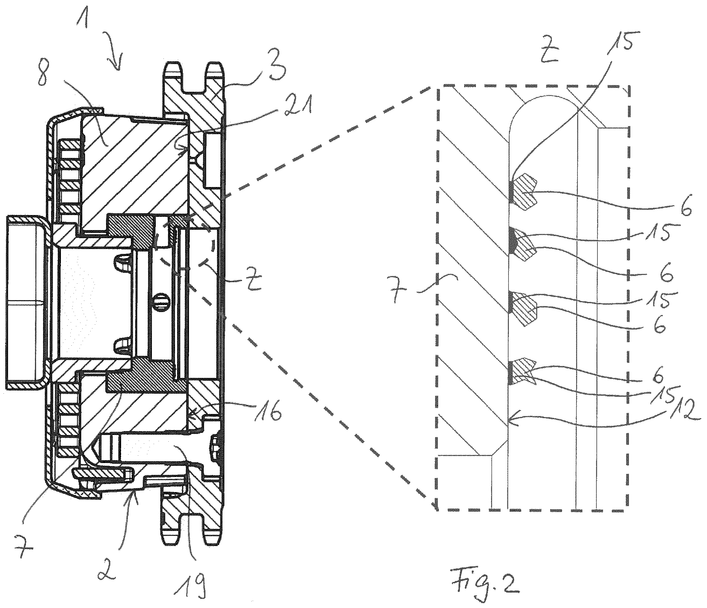

Figur 2 zeigt einen Längsschnitt eines ersten Ausführungsbeispiels eines Schwenkmotorverstellers 1, bei welchem die Hartpartikel 6 auf der ersten Kontaktfläche 12 des Rotors 7 aufgebracht sind. Einem vergrößerten Ausschnitt Z ist ein Ausschnitt des Rotors 7 und dessen Stirnfläche zu entnehmen, welche die erste Kontaktfläche 12 bildet. Der Ausschnitt zeigt schemenhaft die mit dem Rotor 7 durch die aufgeschmolzene Nickelummantelung 15 verbundenen Hartpartikel 6, welche in der Zeichnung schemenhaft vergrößert dargestellt sind. Je nach den Anforderungen an die Reibwerterhöhung können die Hartpartikel 6 dabei partiell oder ganzflächig auf die erste Kontaktfläche 12 aufgebracht werden.

Die Hartpartikel 6 können im Rahmen der Erfindung ebenso auf der zweiten Kontraktfläche 13 der Nockenwelle 5 oder auf beiden Kontaktfläche 12, 13 vorgesehen sein.

Die Hartpartikel 6 erhöhen vorteilhafterweise die Haftreibung an den Kontaktflächen 12, 13 zwischen den beiden verbundenen Reibpartnern Rotor 7 und Nockenwelle 5. Hierdurch können bei gleicher Vorspannung der Reibpartner höhere Momente bzw. Querkräfte übertragen werden. Ebenso kann die Vorspannung der Reibpartner bei gleich übertragbaren Momenten reduziert werden und ein zusätzliches Bauteil zur Reibwerterhöhung und eine damit einhergehende Montage können entfallen.

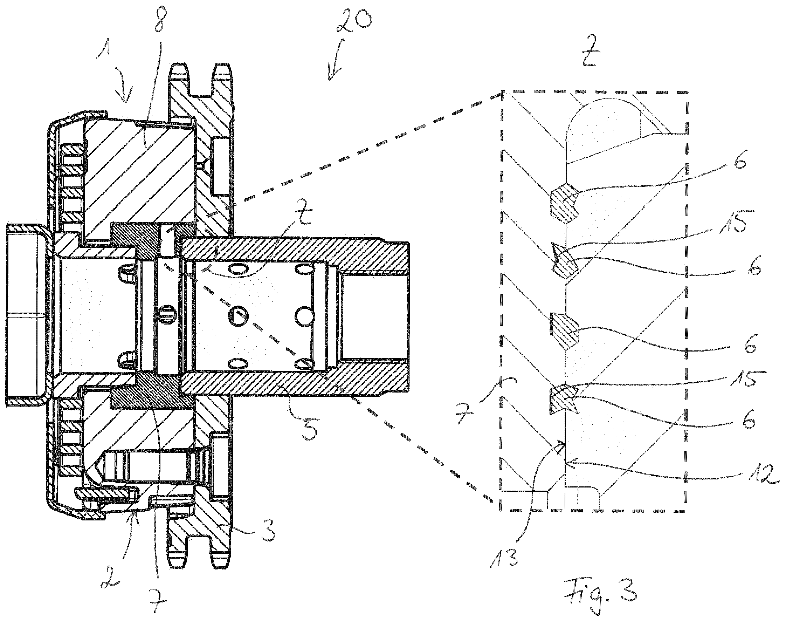

Figur 3 zeigt die Nockenwellenanordnung 20 mit der Nockenwelle 5 und den daran kraftschlüssig angebundenen Schwenkmotorversteller 1. Der vergrößerte Ausschnitt Z zeigt hier die nun verbundenen Kontaktflächen 12 und 13 von Rotor 7 und Nockenwelle 5. Es ist ersichtlich, dass die Hartpartikel 6 in beide Kontaktflächen 12, 13 eingeprägt sind. Die Einprägtiefe ist dabei abhängig von der Materialpaarung von Rotor 7 und Nockenwelle 5. Die Materialen des Rotors 7 und der Nockenwelle 5 können unterschiedlich ausgebildet sein und sind weicher als die Hartpartikel. Der Rotor 7 und/oder der Stator 2 können beispielsweise aus Aluminium ausgebildet sein.

Die Kontaktflächen 12, 13 sind durch den Entfall von zusätzlichen Bauteilen oder Beschichtungen auf den Kontaktflächen 12, 13 abstandslos miteinander kraftschlüssig verbunden, d.h. es liegt ein Nullspalt in der Trennfuge zwischen Rotor 7 und Nockenwelle 5 vor, wodurch vorteilhaft eine Reduktion der vorhandenen Toleranzkette der zusammenwirkenden Bauteile erzielt werden kann.

Die kraftschlüssige Verbindung zwischen Rotor 7 und Nockenwelle 5 kann in einfacher Weise durch eine nicht dargestellte Zentralschraube eines Zentralventils erfolgen. Bei Einsatz eines Zentralventils ergibt sich zudem eine Hubreduzierung eines das Zentralventil steuernden Aktuators, da auch hier Toleranzen bezüglich des Aktuatorhubs wesentlich reduziert werden können oder ganz entfallen.

Gemäß einem nicht dargestellten alternativen Ausführungsbeispiel kann der Rotor 7 einen Adapter umfassen, an welchem die erste Kontaktfläche 12 ausgebildet ist. Ebenso kann die Nockenwelle 5 einen nicht dargestellten Adapter umfassen. Der Adapter kann jeweils aus einem anderen Werkstoff wie der Rotor 7 oder die Nockenwelle 5 oder beispielsweise mittels einer Wärmebehandlung behandelt sein.

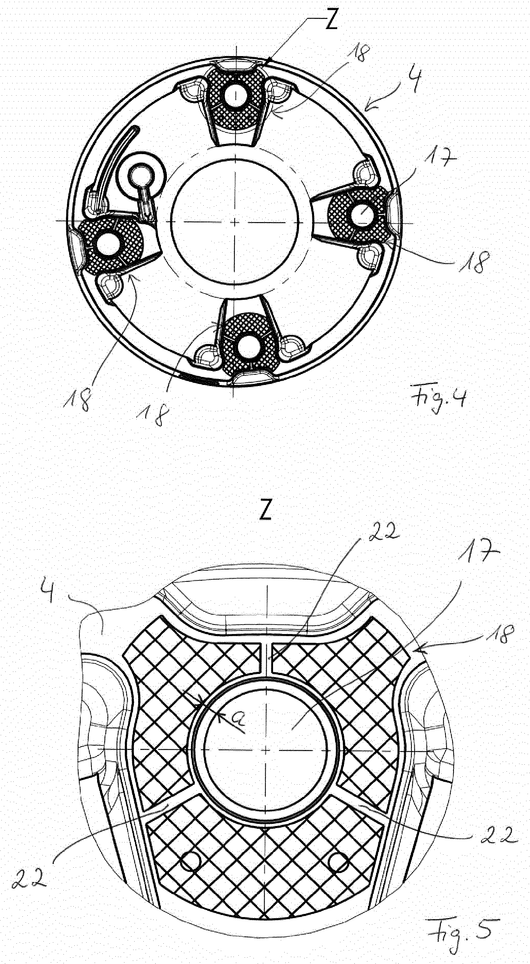

Fig. 4 zeigt einen Statorgrundkörper eines zweiten Ausführungsbeispiels eines erfindungsgemäßen Schwenkmotorverstellers Fig. 5 einen vergrößerten Ausschnitt Z.

Zur Reibwerterhöhung weist die dritte Kontaktfläche 16 des Statorgrundkörpers 4 Hartpartikel 6 auf, welche ohne eine zusätzliche Haltematrix mit dieser verliersicher verbindbar bzw. verliersicher verbunden sind.

Die Hartpartikel 6 erhöhen vorteilhafterweise die Haftreibung an den Kontaktflächen 16, 21 zwischen den beiden verbundenen Reibpartnern Statorgrundkörper 4 und Statordeckel. Hierdurch können bei gleicher Vorspannung der Reibpartner höhere Momente bzw. Querkräfte übertragen werden. Ebenso kann die Vorspannung der Reibpartner bei gleich übertragbaren Momenten reduziert werden und ein zusätzliches Bauteil zur Reibwerterhöhung und eine damit einhergehende Montage können entfallen.

Wie aus Fig. 4 ersichtlich ist, kann die dritte Kontaktfläche 16 des Statorgrundkörpers 4 aus mehreren Kontaktbereichen 18 ausgebildet ist, die im Bereich von in den Stegen 8 ausgebildeten Aufnahmebohrungen 17 vorgesehen sind. Wie oben beschrieben, ist der Statorgrundkörper 4 mittels Schrauben 19 mit dem Statordeckel oder den Statordeckeln verbunden. Die Schrauben 19 werden mit einer bestimmten Vorspannkraft fixiert, so dass die Deckel und der Statorgrundkörper die erwähnten Reibpartner bilden, zwischen welche durch die Verschraubung eine Haftreibung auftritt.

Die Kontaktbereiche 18 sind kreisförmig und jeweils konzentrisch zu einem Mittelpunkt der jeweiligen Aufnahmebohrung 17 ausgebildet, können jedoch ebenso auch belastungsabhängig um die jeweilige Aufnahmebohrung ausgebildet sein. Mit anderen Worten ist auch eine unsymmetrische Ausbildung der Kontaktbereiche denkbar.

Um die Verschraubungsfunktion nicht zu beeinflussen, ist es optional möglich, die Kontaktbereiche 18 jeweils in einem bestimmten Abstand a von der Aufnahmebohrung 17 beabstandet vorzusehen.
Diese Aussparung im Bereich der Aufnahmebohrungen 17 kann vorzugsweise mittels einer Maskierung/Abdeckung der Gewindebohrung hergestellt werden. Durch den Einsatz einer Maskierung entstehen mehrere Stege 22, die die Kontaktbereiche 18 unterbrechen.

Im Rahmen der Erfindung ist auch eine Kombination der Ausführungsbeispiele bzw. der Ausführungsformen denkbar. So können die reibwerterhöhenden Hartpartikel mit einer Reibscheibe zwischen den Reibpartner kombiniert werden. Die Hartpartikel können ebenso auf eine Reibscheibe, welche zwischen den Reibpartnern angeordnet ist, aufgebracht werden.

Als Vorteile der Erfindung sind zusammengefasst zu nennen:
- Reibwerterhöhung: Bei gleicher Vorspannkraft der Reibpartner werden höhere Momente und / oder Querkräfte übertragen. Reduzierung der Vorspannkraft der Reibpartner bei gleich übertragbaren Momenten (Downsizing).
- Verliersicherung: Die Hartpartikel werden durch das Aufschmelzen der Ummantelung stoffschlüssig und damit verliersicher mit der bzw. den Kontaktflächen verbunden. Dabei ist eine partielle Aufbringung auf die Kontaktflächen möglich.
- Anpassung an den Anwendungsfall: Die Hartpartikel können in Größe an den jeweiligen Anwendungsfall und die dabei auftretenden Momente und Querkräfte sowie an Materialpaarungen angepasst werden. Ebenso können die Hartpartikel je nach Anwendungsfall auf eine oder mehrere Kontaktflächen aufgebracht werden.

## Patentansprüche

1. Schwenkmotorversteller (1) für eine Nockenwelle (5), mit einem Stator (2), welcher über ein Antriebsrad (3) mit einer Kurbelwelle antriebsverbunden ist, mit einem Rotor (7), der mit einer Nockenwelle (5) drehfest verbindbar und gegen den Stator (2) verdrehbar ist,
wobei das Antriebsrad (3) mit einem Statorgrundkörper (4) oder einem mit dem Statorgrundkörper (4) abgedichtet verbundenen Statordeckel drehfest oder einteilig ausgebildet ist,
wobei zwischen zwei Stegen (8) des Stators (2) jeweils ein Flügel (9) des Rotors (7) positionierbar ist und mit Hilfe des Flügels (9) ein zwischen den beiden Stegen (8) ausgebildeter Zwischenraum in eine erste Druckkammer (10) und in eine zweite Druckkammer (11) geteilt ist,
wobei der Rotor (7) oder ein mit dem Rotor (7) zusammenwirkendes Bauteil eine erste Kontaktfläche (12) zur kraftschlüssigen Verbindung mit einer zweiten, an der Nockenwelle (5) oder einem Nockenwellenbauteil ausgebildeten Kontaktfläche (13) aufweist,
wobei der Statorgrundkörper (4) eine dritte Kontaktfläche (16) zur kraftschlüssigen Verbindung mit einer vierten, an dem Statordeckel ausgebildeten Kontaktfläche (21) aufweist, und wobei Mittel zur Reibwerterhöhung der kraftschlüssigen Verbindung durch einen Mikroformschluss zwischen Rotor (7) und Nockenwelle (5) und/oder zwischen Statorgrundkörper (4) und Statordeckel vorgesehen sind,
und wobei zur Reibwerterhöhung Hartpartikel (6) vorgesehen sind, welche ohne zusätzliche Bauteile oder Beschichtungen der Kontaktflächen mit wenigstens einer der Kontaktflächen (12, 13, 16, 21) verbindbar bzw. verbunden sind, **dadurch gekennzeichnet, dass** die Hartpartikel (7) eine Ummantelung (15) aufweisen, wobei die Hartpartikel (6) durch Aufschmelzen der Ummantelung (15) mit der bzw. den Kontaktflächen (12, 13, 16, 21) verliersicher verbindbar bzw. verliersicher verbunden sind.

2. Schwenkmotorversteller (1) nach Anspruch 1, **dadurch gekennzeichnet, dass** die Hartpartikel (6) partiell oder ganzflächig auf der bzw. den Kontaktflächen (12, 13, 16, 21) aufgebracht worden sind.

3. Schwenkmotorversteller (1) nach einem der vorangegangenen Ansprüche, **dadurch gekennzeichnet, dass** die Hartpartikel (6) als Industrie-Diamanten mit einer Nickelummantelung (15) ausgebildet und mittels eines atmosphärischen Plasmabeschichtungsverfahrens haftend aufgebracht worden sind.

4. Schwenkmotorversteller (1) nach einem der vorangegangenen Ansprüche, **dadurch gekennzeichnet, dass** die Kontaktflächen (12, 13, 16, 21) als Stirnflächen ausgebildet sind.

5. Schwenkmotorversteller (1) nach einem der vorangegangenen Ansprüche, **dadurch gekennzeichnet, dass** die Hartpartikel (6) auf der ersten Kontaktfläche (12) des Rotors (7) und/oder der zweiten Kontaktfläche (13) der Nockenwelle (5) und/oder auf der dritten Kontaktfläche (16) des Statorgrundkörpers (4) und/oder auf der vierten Kontaktfläche (21) des Statordeckels haftend aufgebracht sind.

6. Schwenkmotorversteller (1) nach einem der vorangegangenen Ansprüche, **dadurch gekennzeichnet, dass** der Rotor (7) einen Adapter umfasst, an welchem die erste Kontaktfläche (12) ausgebildet ist.

7. Schwenkmotorversteller (1) nach Anspruch 6, **dadurch gekennzeichnet, dass** die Hartpartikel (6) wenigstens auf der dritten Kontaktfläche (16) des Statordeckels haftend aufgebracht sind, wobei die dritte Kontaktfläche (16) aus mehreren Kontaktbereichen (18) ausgebildet ist, die im Bereich von in den Stegen (8) ausgebildeten Aufnahmebohrungen (17) vorgesehen sind.

8. Schwenkmotorversteller (1) nach Anspruch 7, **dadurch gekennzeichnet, dass** die Kontaktbereiche (18) kreisförmig und jeweils konzentrisch zu der jeweiligen Aufnahmebohrung (17) ausgebildet sind

9. Schwenkmotorversteller (1) nach Anspruch 7, **dadurch gekennzeichnet, dass** die Kontaktbereiche (18) belastungsabhängig um die jeweilige Aufnahmebohrung (17) ausgebildet sind.

10. Schwenkmotorversteller (1) nach einem der Ansprüche 7 bis 9, **dadurch gekennzeichnet, dass** die Kontaktbereiche (18) jeweils in einem bestimmten Abstand (a) von der Aufnahmebohrung (17) beabstandet vorgesehen sind.

11. Schwenkmotorversteller (1) nach einem der vorangegangenen Ansprüche, **dadurch gekennzeichnet, dass** die Größe der Hartpartikel (6) je nach Anwendungsfall vorgesehen ist.

12. Nockenwellenanordnung (20) mit einer Nockenwelle (5) und einem Schwenkmotorversteller (1) nach einem der vorangegangenen Ansprüche 1 bis 11.

13. Nockenwellenanordnung (20) nach Anspruch 12, **dadurch gekennzeichnet, dass** die Nockenwelle (5) und der Rotor (7) mittels einer Zentralschraube kraftschlüssig verbunden sind.

## Claims

1. Pivoting motor adjuster (1) for a camshaft (5), having a stator (2) which is drive-connected to a crankshaft via a drive wheel (3), and having a rotor (7) which can be connected to a camshaft (5) for conjoint rotation and can be rotated with respect to the stator (2), wherein the drive wheel (3) is formed so as to be fixed in rotation with, or formed in one piece with, a stator basic body (4) or with a stator cover connected to the stator basic body (4) in a sealed manner, wherein in each case a blade (9) of the rotor (7) can be positioned between two webs (8) of the stator (2), and an interspace formed between the two webs (8) is divided by means of the blade (9) into a first pressure chamber (10) and into a second pressure chamber (11), wherein the rotor (7) or a component interacting with the rotor (7) has a first contact surface (12) for force-fitting connection with a second contact surface (13) formed on the camshaft (5) or a camshaft component, wherein the stator basic body (4) has a third contact surface (16) for force-fitting connection with a fourth contact surface (21) formed on the stator cover, and wherein means for increasing the coefficient of friction of the force-fitting connection are provided by a microform-fit between the rotor (7) and camshaft (5) and/or between the stator basic body (4) and stator cover, and wherein, in order to increase the coefficient of friction, there are provided hard particles (6) which, without additional components or coatings of the contact surfaces, can be or are connected to at least one of the contact surfaces (12, 13, 16, 21), **characterized in that** the hard particles (7) have a casing (15), wherein the hard particles (6) can be or are captively connected to the contact surface(s) (12, 13, 16, 21) by melting of the casing (15).

2. Pivoting motor adjuster (1) according to Claim 1, **characterized in that** the hard particles (6) have been applied to the contact surface(s) (12, 13, 16, 21) over part or the whole area thereof.

3. Pivoting motor adjuster (1) according to either of the preceding claims, **characterized in that** the hard particles (6) take the form of industrial diamonds having a nickel casing (15) and have been applied in an adhering manner by means of an atmospheric plasma coating method.

4. Pivoting motor adjuster (1) according to one of the preceding claims, **characterized in that** the contact surfaces (12, 13, 16, 21) are formed as end surfaces.

5. Pivoting motor adjuster (1) according to one of the preceding claims, **characterized in that** the hard particles (6) are applied in an adhering manner to the first contact surface (12) of the rotor (7) and/or to the second contact surface (13) of the camshaft (5) and/or to the third contact surface (16) of the stator basic body (4) and/or to the fourth contact surface (21) of the stator cover.

6. Pivoting motor adjuster (1) according to one of the preceding claims, **characterized in that** the rotor (7) comprises an adapter on which the first contact surface (12) is formed.

7. Pivoting motor adjuster (1) according to Claim 6, **characterized in that** the hard particles (6) are applied in an adhering manner at least to the third contact surface (16) of the stator cover, wherein the third contact surface (16) is formed from a plurality of contact regions (18) which are provided in the region of receiving bores (17) formed in the webs (8).

8. Pivoting motor adjuster (1) according to Claim 7, **characterized in that** the contact regions (18) are formed in a circular manner and in each case concentrically to the respective receiving bore (17) .

9. Pivoting motor adjuster (1) according to Claim 7, **characterized in that** the contact regions (18) are formed around the respective receiving bore (17) in a loading-dependent manner.

10. Pivoting motor adjuster (1) according to one of Claims 7 to 9, **characterized in that** the contact regions (18) are each provided so as to be spaced apart from the receiving bore (17) at a certain distance (a).

11. Pivoting motor adjuster (1) according to one of the preceding claims, **characterized in that** the size of the hard particles (6) is provided depending on the application case.

12. Camshaft arrangement (20) having a camshaft (5) and a pivoting motor adjuster (1) according to one of the preceding Claims 1 to 11.

13. Camshaft arrangement (20) according to Claim 12, **characterized in that** the camshaft (5) and the rotor (7) are connected in a force-fitting manner by means of a central screw.

## Revendications

1. Dispositif de réglage de moteur pivotant (1) destiné à un arbre à cames (5), ledit dispositif comprenant un stator (2) qui est relié en entraînement à un vilebrequin par le biais d'une roue d'entraînement (3), un rotor (7) qui peut être relié solidairement en rotation à un arbre à cames (5) et qui peut tourner par rapport au stator (2),
la roue d'entraînement (3) étant conçue pour être solidaire en rotation ou d'une seule pièce avec un corps de base de stator (4) ou un couvercle de stator relié de manière étanche au corps de base de stator (4),
une ailette (9) du rotor (7) pouvant être positionnée entre deux nervures (8) du stator (2) et un espace intermédiaire formé entre les deux nervures (8) étant divisé, à l'aide de l'ailette (9), en une première chambre de pression (10) et en une deuxième chambre de pression (11),
le rotor (7) ou un composant qui coopère avec le rotor (7) comportant une première surface de contact (12) destinée à établir la liaison en force avec une deuxième surface de contact (13) formée sur l'arbre à cames (5) ou un composant d'arbre à cames,
le corps de base de stator (4) comportant une troisième surface de contact (16) destinée à établir une liaison en force avec une quatrième surface de contact (21) formée sur le couvercle de stator, et des moyens destinés à augmenter le coefficient de frottement de la liaison en force étant prévus par une micro-liaison par complémentarité de formes entre le rotor (7) et l'arbre à cames (5) et/ou entre le corps de base de stator (4) et le couvercle de stator,
et des particules dures (6) étant prévues pour augmenter le coefficient de frottement et étant ou pouvant être reliées à au moins une des surfaces de contact (12, 13, 16, 21) sans composants ou revêtements supplémentaires des surfaces de contact, **caractérisé en ce que** les particules dures (7) comportent un enrobage (15), les particules dures (6) étant reliées de manière captive ou pouvant être reliées de manière captive à l'au moins une surface de contact (12, 13, 16, 21) par fusion de l'enrobage (15).

2. Dispositif de réglage de moteur pivotant (1) selon la revendication 1, **caractérisé en ce que** les particules dures (6) ont été appliquées partiellement ou totalement sur l'au moins une surface de contact (12, 13, 16, 21).

3. Dispositif de réglage de moteur pivotant (1) selon l'une des revendications précédentes, **caractérisé en ce que** les particules dures (6) sont conçues comme des diamants industriels pourvus d'un enrobage de nickel (15) et ont été appliquées de manière adhésive au moyen d'un procédé de revêtement par plasma atmosphérique.

4. Dispositif de réglage de moteur pivotant (1) selon l'une des revendications précédentes, **caractérisé en ce que** les surfaces de contact (12, 13, 16, 21) sont conçues comme des faces frontales.

5. Dispositif de réglage de moteur pivotant (1) selon l'une des revendications précédentes, **caractérisé en ce que** les particules dures (6) sont appliquées de manière adhésive sur la première surface de contact (12) du rotor (7) et/ou la deuxième surface de contact (13) de l'arbre à cames (5) et/ou sur la troisième surface de contact (16) du corps de base de stator (4) et/ou sur la quatrième surface de contact (21) du couvercle de stator.

6. Dispositif de réglage de moteur pivotant (1) selon l'une des revendications précédentes, **caractérisé en ce que** le rotor (7) comprend un adaptateur sur lequel est formée la première surface de contact (12).

7. Dispositif de réglage de moteur pivotant (1) selon la revendication 6, **caractérisé en ce que** les particules dures (6) sont appliquées de manière adhésive au moins sur la troisième surface de contact (16) du couvercle de stator, la troisième surface de contact (16) étant formée d'une pluralité de zones de contact (18) qui sont prévues au niveau d'alésages de réception (17) formés dans les nervures (8).

8. Dispositif de réglage de moteur pivotant (1) selon la revendication 7, **caractérisé en ce que** les zones de contact (18) sont circulaires et concentriques chacune à l'alésage de réception (17) respectif.

9. Dispositif de réglage de moteur pivotant (1) selon la revendication 7, **caractérisé en ce que** les zones de contact (18) sont formées autour de l'alésage de réception (17) respectif en fonction de la charge.

10. Dispositif de réglage de moteur pivotant (1) selon l'une des revendications 7 à 9, **caractérisé en ce que** les zones de contact (18) sont prévues chacune à une distance déterminée (a) de l'alésage de réception (17).

11. Dispositif de réglage de moteur pivotant (1) selon l'une des revendications précédentes, **caractérisé en ce que** la taille des particules dures (6) est prévue en fonction de l'application.

12. Ensemble formant arbre à cames (20) comprenant un arbre à cames (5) et un dispositif de réglage de moteur pivotant (1) selon l'une des revendications 1 à 11 précédentes.

13. Ensemble formant arbre à cames (20) selon la revendication 12, **caractérisé en ce que** l'arbre à cames (5) et le rotor (7) sont reliés en force au moyen d'une vis centrale.
